# EUROPEAN PATENT SPECIFICATION

(11) **EP 4 464 511 B1**
(45) Date of publication and mention of the grant of the patent: **11.03.2026**
(21) Application number: 24152259.8
(22) Date of filing: 16.01.2024
(51) Int. Cl.: B32B 37/10, E04B 1/78

(54) **METHOD AND DEVICE FOR SEALING A MULTILAYER BLANKET FOR THERMAL INSULATION OF BUILDINGS**
VERFAHREN UND VORRICHTUNG ZUM ABDICHTEN EINES MEHRSCHICHTIGEN DÄMMSTOFFS ZUR WÄRMEDÄMMUNG VON GEBÄUDEN
PROCÉDÉ ET DISPOSITIF POUR SCELLER UNE COUVERTURE MULTICOUCHE POUR L'ISOLATION THERMIQUE DE BÂTIMENTS

(30) Priority: 19.05.2023 PT 2023118664; 15.01.2024 PT 2023119212
(43) Date of publication of application: 20.11.2024
(73) Proprietor: Reflectherm, LDA, 6200-823 Tortosendo (PT)
(72) Inventor: ESGALHADO OLIVEIRA, Rui Manuel, 6200-823 TORTOSENDO (PT)
(74) Representative: Patentree

(56) References cited:
- US-A1- 2016 046 096
- US-A1- 2019 143 450

## Description

### TECHNICAL FIELD

The present description refers to a method and device for sealing a blanket, a multilayer reflective thermal insulation. The present disclosure comprises multilayers, for thermal insulation of buildings, particularly constructions, structures or architectural works.

### BACKGROUND

Today, the most common technique for joining the various layers of materials that make up the multilayered products uses a sewing process with one or two needles, with at least three seams distributed on the width of the material and along the entire length thereof.

A longitudinal finishing is also common, with a binding machine providing the product with a finishing of the type used in conventional blankets.

Any of these processes of joining the various constituent layers has the drawback of perforating the assembly, enabling water vapour to lodge inside, this being hard to eliminate and will later give rise to molds, fungi and odors, which is not at all advisable for a healthy environment. Moreover, on being open at the sides, it allows for the introduction of viruses and bacteria, besides altering its hygrometric behavior.

Nowadays, this type of products, multilayer thermal insulations, continues to be sewn and perforated and/or glued layer by layer, without any place for a longitudinal sealing, whereby reducing its seal-tight properties.

Gluing the entire surface of the material has the further drawback of reducing its thickness, increasing conductivity and diminishing the thermal resistance of the insulation product.

Document WO2007118321A2 presents a method of thermally insulating an object that requires a Class A standard insulation material, said method comprising suitably locating a metallized polymeric reflective insulation material adjacent said object, wherein said polymeric material is selected from a closed cell foam, polyethylene foam, polypropylene foam, expanded polystyrene foam, multi-film layers assembly and a bubble-pack assembly. The object is, preferably, a packaging, a vehicle or a residential, commercial or industrial building or establishment. The polymeric material may contain a fire retardant and the bright surface of the metallized layer has a clear lacquer coating or a polyester foil to provide anti-corrosion properties and which meets commercial reflectance criteria.

Document CA3017292A1 refers to a thermally insulating sheet for installation adjacent a surface of an object that includes a reflective metallized polymeric insulation material having moisture vapour transference properties. An apparatus and methods for producing a reflective metallized polymeric thermally insulating assembly having moisture vapour transference properties are also provided. The insulation material provides enhanced thermal retention.

Document US 2019/143450 A1 discloses a vacuum insulation panel manufacturing method that makes it possible to manufacture low-cost, high-performance vacuum insulation panels, and a vacuum insulation panel. The method involves: a stacking step in which a first metal plate is stacked on one side of an insulating core material, and in which a backing member having an opening and a second metal plate having an evacuation port are stacked, with the opening and the evacuation port stacking, on the other surface of the core member in the order of backing member and second metal plate from the core member side; a first welding step for welding outwards of where the core member is arranged in the first metal plate and the second metal plate; an evacuating step from the evacuation port to create a vacuum in an inner area which is held between the first metal plate and the second metal plate and in which the core member is arranged; and a laser welding step in which, in a state in which the inner area is made into a vacuum by the evacuating step, the evacuation port is sealed by means of a sealing material and the sealing material, the second metal plate and the backing member are laser welded.

These facts are described so as to illustrate the technical problem solved by the embodiments of the present document.

### GENERAL DESCRIPTION

The present description refers to a method for continuous sealing of a blanket for application in buildings, wherein said blanket comprises one or more inner layers arranged between an upper outer layer and a lower outer layer, using a device comprising in the direction of progression of the blanket: at least two side fusing wedges for partially merging the side ends of the outer layers between them; a first compressor roller and a second compressor roller arranged for compressing the side ends partially merged between the rollers; wherein each fusing wedge comprises a heated surface and a support surface for receiving and partially merging the side ends of the outer layers between said heated surface and said support surface; wherein said method for continuous sealing comprises the following steps: arranging the blanket in the direction of progression, comprising one or more inner layers, the upper outer layer and the lower outer layer; determining the melt temperature of the outer layers; partially merging the side ends of the outer layers between them; compressing the side ends partially merged between the first compressor roller and the second compressor roller.

There is no known manufacturer that produces multilayer blankets having thicknesses above 15 mm, with a protected aluminum exterior, that uses a joining process of the assembly other than stitching or intermediate gluing.

All these drawbacks are solved with the present disclosure which gives rise to a seamless product, not perforated and welded longitudinally, whereby avoiding the possibility of entry and establishment of viruses or bacteria inside thereof by accumulation of water vapour and maintaining its hygrometric and thermal characteristics.

The present disclosure has already demonstrated that it has industrial application in sealing the multilayer insulations for the thermal treatment of buildings and is accepted and preferred by a number of customers who know the advantages thereof and are committed to improving the thermal efficiency of buildings.

The process used by this disclosure counteracts the aforementioned drawbacks, giving rise to a final product having more efficient hygrometric and thermal characteristics.

The present disclosure provides a method for continuous sealing of a blanket for application in buildings, wherein said blanket comprises one or more inner layers arranged between an upper outer layer and a lower outer layer, using a device comprising in the direction of progression of the blanket at least two side fusing wedges for partially merging the side ends of the outer layers between them; a first compressor roller and a second compressor roller arranged for compressing the side ends partially merged between the rollers; wherein each fusing wedge comprises a heated surface and a support surface for receiving and partially merging the side ends of the outer layers between said heated surface and said support surface; wherein said method for continuous sealing comprises the following steps: arranging the blanket in the direction of progression, comprising one or more inner layers, the upper outer layer and the lower outer layer; determining the melt temperature of the outer layers; partially merging the side ends of the outer layers between them; compressing the side ends partially merged between the first compressor roller and the second compressor roller.

In an embodiment, the method may further comprise an electronic data processor configured for controlling the melt temperature of the outer layers so as to partially merge the side ends of the outer layers between them.

In an embodiment, the electronic data processor may be configured for controlling the movement to drive the compressor rollers, providing controlled movement.

In an embodiment, the electronic data processor is configured for controlling the longitudinal distance, that is, the aperture/distance between the first compressor roller and the second compressor roller independently to apply different pressures on the merged side ends.

The present disclosure also describes a non-temporary storage means, including program instructions to implement a method for continuous sealing of a blanket for application in buildings, the program instructions including instructions executable by a data processor to carry out the method of any of the preceding embodiments.

The present disclosure further presents a device for continuous sealing of a blanket for application in buildings, wherein said blanket comprises one or more inner layers arranged between an upper outer layer and a lower outer layer, said device comprising in the direction of progression of the blanket: at least two side fusing wedges to partially merge the side ends of the outer layers between them; a first compressor roller and a second compressor roller arranged for compressing the partially merged side ends between the rollers; wherein each fusing wedge comprises a heated surface and a support surface for receiving and partially merging the side ends of the outer layers between said heated surface and said support surface.

In an embodiment, each of the heated surfaces of each of the fusing wedges comprises a slope perpendicular to the direction of progression of the blanket. This slope on each of the wedges enables to partially merge the side ends of the outer layers between them, while one or more inner layers are not merged together with the outer layers.

In an embodiment, the longitudinal distance, that is, the aperture/distance between the first compressor roller and the second compressor roller is independently adjustable to apply different pressures on the merged side ends.

In an embodiment, the device may further comprise at least one central fusing wedge to merge the outer layers between them, wherein each fusing wedge comprises a heated surface and a support surface for receiving and merging the outer layers between said heated surface and said support surface.

In an embodiment, the device may further comprise at least one blanket accompanying transverse roller to direct the side ends of the outer layers towards the two side fusing wedges.

In an embodiment, the device may further comprise one or more means of restraint and heating a fusing glue for longitudinal application between one or more inner layers and the upper outer layer and/or a lower outer layer.

In an embodiment, the fusing glue is applied with a thickness between 0.5 and 1.5 mm, in particular 1 mm.

In an embodiment, the first compressor roller and the second compressor roller are linked to a bearing connected on one or more side supports, wherein the side supports are fixed structures that provide support and stability to the compressor rollers.

In an embodiment, the bearings of the shafts are configured for permitting free rotation and supporting axial and radial loads.

In an embodiment, the first compressor roller and the second compressor roller are configured for comprising a speed control mechanism to adjust the rotation of said compressor rollers, wherein the control mechanism includes a mechanical transmission or a direct transmission for transferring the energy of a motor to the compressor rollers.

### BRIEF DESCRIPTION OF THE DRAWINGS

For an easier understanding, figures are appended hereto, which represent preferred embodiments that are not intended to limit the object of the present description.
**Figure 1****:** Schematic and simplified perspective representation of an embodiment of the sealing machine/table according to the disclosure.
**Figure 2****:** Perspective representation of the raw material feed section.
**Figure 3****:** Representation of a schematic cut section of the machine of figure 1.

### DETAILED DESCRIPTION

The present disclosure refers to a method for continuous sealing of a blanket for application in buildings, using a device comprising: at least two side fusing wedges for partially merging the side ends of the outer layers; a first compressor roller and a second compressor roller arranged for compressing the side ends between the rollers; wherein each fusing wedge comprises a heated surface and a support surface for receiving and merging the side ends of the outer layers between said heated surface and said support surface; wherein said method for continuous sealing comprises the following steps: arranging the blanket in the direction of progression; determining the melt temperature of the outer layers; merging the side ends of the outer layers between them; compressing the side ends partially merged between the first compressor roller and the second compressor roller.

The present disclosure refers to a machine for sealing multilayer blankets for thermally insulating buildings, which enables the encapsulation between two foils of protected aluminum of diverse layers of polyester fibrous material and/or polyethylene foams separated by a metallized polyester foil, which remain stable inside thereof by means of strands of fusing glue 1mm thick, distributed longitudinally, upwards and downwards of the assembly of inner layers, connecting these permanently to the outer foils made of protected aluminum which are, in turn, joined to each other along the entire length and on both sides of the material produced.

The final product thus obtained constitutes a barrier to the transfer of energy from and to the inside of the buildings, enabling the conditions of comfort generated therein to be maintained, be they heating or cooling.

In an embodiment of the present disclosure, the machine as a whole comprises 2 distinct sections.

The first section is the one situated at the rear of the machine and was developed to support a large number of rollers (rollers of fibrous polyester material and/or rollers of polyethylene foam and rollers of metallized polyester), which constitute the inner material of the blanket which may vary between 3 and over 20 layers. It is constituted of 6 sets of supports for rollers designated by raw material feeders **23** to **28.** In turn, each set is constituted of a metal structure on which there is mounted, on bearings, 6 supports **34** where the rollers of raw material feeding the machine are placed.

Still at the rear, but at the entrance to the sealing machine, is another support **29,** also a raw material feeder, which comprises 2 supports for rollers **30** and **31,** supported on rolling bearings where the 2 rollers of protected aluminum are placed, constituting the outer layers of the blanket.

Fixed to this support **29** are 2 reservoirs of fusing glue **32** and **33,** one on each side of the support, each one feeding the outlet spouts situated on both sides, from below and from above the assembly of inner layers, which distribute the strand of glue 1 mm thick to all the length of the material as it advances in production.

Next to this last support, which is situated at the entry of the sealing table, all the inner layers provided by the raw material feed rollers are combined, already aligned, making up the reference to be produced, being inserted between the two foils of protected aluminum coming from the raw material feeder **29** and where the distribution of the strand of fusing glue begins.

The second section is the sealing table/machine *per se* **1,** where the assembly of the material enters onto the table and under the accompanying roller **2.** Then the first heating wedge **4** is mounted on a support fixed to the table and in the central part thereof, which may or may not be running, depending on the reference in production.

The material is conducted along the table up to the side heating wedges **7** and **8,** which transmit to the longitudinal edges of the 2 layers of protected aluminum sufficient energy to produce the partial merger of same which, upon passing immediately afterwards between the compressor rollers **10** and **11** will be sealed/welded, enclosing on the inside thereof the constituent layers of the blanket.

These rollers **10** and **11** have positive movement, provided by the electric motor **14** which is located beneath the table, fixed to the metal structure.

At the same time as it performs, by effect of pressure from these rollers, the sealing of the material, as they have positive movement, they perform, by traction effect the conduction of the material, blanket, across the table and its delivery to the winding rack **22** which in turn is commanded by an independent electric motor **20.**

This rack is used to wind the material in production, with a previously defined length defined and controlled by the meter counter installed in the upper part of the electric panel **18.**

The design and establishment of all the parameters described enable this machine to be adapted to produce the most varied types of multilayer reflective thermal blanket, sealed/welded longitudinally, with a total thickness of up to 60mm.

The present disclosure is next described in greater detail for purposes of illustration, not being limiting in character, represented in the appended drawings, wherein:

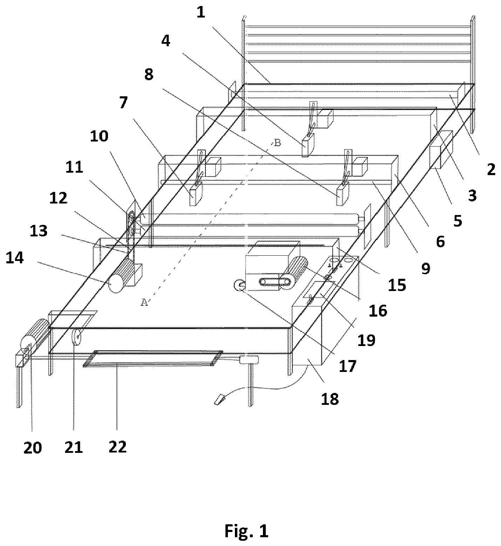

- **fig.1** is a schematic and simplified perspective representation of an embodiment of the sealing machine/table according to the invention;

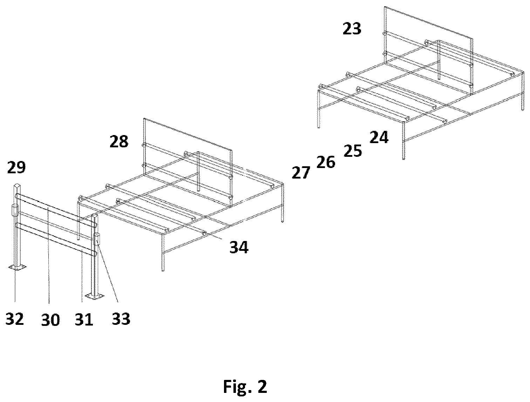

- **fig. 2** is a perspective representation of the raw material feed section; and

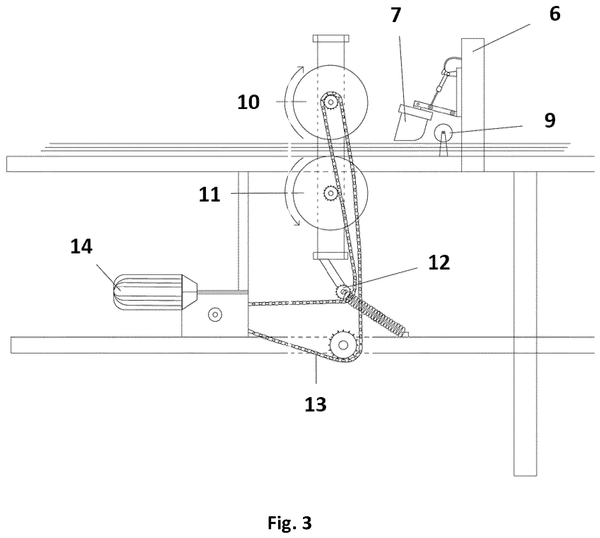

- **fig. 3** is a schematic cut section of the machine of **figure 1****.**

With reference to the drawings, the preferred embodiment of the invention will now be described, wherein the sealing machine, **Fig. 1****,** is constituted by the set of components represented and mounted as described below.

The support structure of the table **1** serves to house all the machine's component parts and is constituted by a metal structure that supports the diverse components, on which wooden boards are seated (not shown, to enable visualization of the components of the machine situated on the plane below the table) which serve to support/follow the displacement on the horizontal plane of the material manufactured.

This metal structure is duly fixed to the floor by supports, also made of metal, with screws and washers (not shown), to maintain its stability and alignment.

The material that makes up the blanket is delivered from the back of the machine, with all the constituent layers duly grouped and aligned and already with the administration of the strand of glue received from the spouts (not shown) fed by the reservoirs of fusing glue **32** and **33,** fixed on the sides of the aluminum feeder **29** which is situated at the rear of the table and immediately next to it and which receive electric energy from the electric panel **5,** whose temperature and pressure controllers are located in the upper part thereof.

A first accompanying roller **2** of the material delivered is fastened at the entry of the table and immediately afterwards, a transverse support **3** on which there is fastened, at the center, a first heating wedge **4** which works occasionally, for the production of specific references.

Further, there is a new transverse support **6** where the two heating wedges **7** and **8** are mounted, one on each side of the support, that provide sealing of the material *per se.*

These wedges are heated from the electric panel **18** where all the electrical commands of said machine are located, including power cut-off devices (not shown). Among these wedges and the respective support, there is a second accompanying roller of the material **9.**

After the wedges there is a set of 2 compressor rollers, a lower one **11** mounted beneath the table and an upper one **10** mounted above the table, in contact by way of a cross aperture on the wooden platform and which maintains the horizontal movement of the material. Both the rollers are linked to bearings (not shown), mounted on the supports existing on both sides of the table.

The aperture between these two rollers is controlled by means of a cog wheel with variable position **12** interspersed in the current that connects the rollers to the motor and which makes it possible to vary the distance between same, maintaining the pressure necessary to promote the sealing, with a greater or smaller aperture pursuant to the quantity of layers of the material in production.

These rollers have positive movement, commanded by an independent electric motor **14** through the current **13** which connects the cog wheels mounted on the shafts of the rollers and of the motor.

Said rollers simultaneously carry out the function of sealing the material, by effect of pressure and of delivery thereof to the winding rack **22** by effect of traction, since they execute positive movement.

Immediately after the compressor rollers there is another transverse support **15,** above the table, where a motor **16** is mounted, commanding a circular-cutting pair of scissors **17** for automatic cut of the material produced after a number of pre-set meters, both mounted on a structure that performs a back-and-forth movement along a rack installed on said support.

The movement of the winding rack **22** is executed by the motor **20** and its speed is controlled by a sensor **21** which makes the winding speed vary in accordance with the material available to wind.

All the automatic controls of the machine (functioning, motors, heating of the wedges, production speed, meter count, etc.) are performed from the electric panel **18** and pre-set through the commands existing on the control panel **19** situated in the upper part of this panel.

**Fig. 2** refers to the raw material feed section and is constituted of a set of 6 feeders **23** to **28** at the rear of the machine, 1 meter apart from each other, each containing 6 supports **34** supported on rolling bearings (not shown), which enable the placement of 6 raw material rollers (raw material that constitutes the inner layers of the blanket) and yet another feeder **29** situated at 2 meters from the others, also at the rear of the machine, but at the entry of the table, to which the rolling bearings (not shown) are fastened, sustaining the supports **30** and **31** of the rollers of protected aluminum which constitutes the raw material of the outer layers.

On this support and on the side part there are also two reservoirs of fusing glue **32** and **33** mounted one on each side of the support, which feed, under pressure, the spouts (not shown) that provide the strand of glue 1 mm thick that maintains the connection between the inner layers and the outer layers of the blanket.

These reservoirs receive electric energy from the electric panel **5,** the temperature necessary for merging the glue (150°C) and the output pressure (2 bar) being pre-set by way of the commands situated at the top of said panel.

**Fig. 3** represents the schematic cut section of the sealing mechanism of the machine of **Fig. 1****,** where it is possible to see: the support **6** on which the side heating wedge **7** is fastened, producing the partial merger of the material, the accompanying roller **9,** the current **13** that connects the motor **14,** the rollers **10** and **11** and the interspersed cog wheel **12** that enables the aperture to vary between the rollers maintaining the pressure necessary to compress the material whereby promoting the sealing/welding thereof.

The present disclosure refers to the process achieved by a machine, able for longitudinally sealing the multilayer blankets and being constituted, in essence, by a table where the sealing operation *per se* is carried out, containing the various elements necessary for consolidating the operation.

The assembly of layers is delivered through the rear part of the table and follows on horizontally to the opposite end, passing through the side heating wedges **7** and **8** which, powered by the electric panel **18,** transmit sufficient energy to partially merge the longitudinal edges of the outer material, permanently in contact with the wedges, which will pass immediately between 2 compressor rollers **10** and **11** mechanically commanded, where the sealing/welding of the 2 outer layers made of protected aluminum is achieved by effect of pressure, enclosing the various layers of the material that constitutes the blanket inside thereof and by traction blanket is conducted/transported to the end of the table and delivered to the winding rack **22.**

The present disclosure describes a process of sealing multilayer blankets, comprising a machine/table **1** on which all the components that make up the machine are assembled, characterized by comprising 1 accompanying roller of the material **2,** a first transverse support **3** to the center from which a heating wedge **4** is assembled, a second transverse support **6** on which 2 side heating wedges **7** and **8** are mounted one on each side of the support, 2 compressor rollers **10** and **11** whose shafts are assembled on the respective bearings connected to the side supports, moved by way of the motor **14,** a third transverse support **15** on which a circular-cutting scissor moves **17** coupled to the motor **16** which gives it movement and a winding rack **22** moved by the motor **20** with winding speed controlled by the sensor **21** and where the material produced is wound.

In an embodiment, the disclosure is characterized by the existence of a set of supports **23** to **28** and **29** (raw material feeders) mounted at the rear of the machine and which provide all the constituent material of the final product, the blanket.

In an embodiment, the disclosure is characterized by having 2 reservoirs of fusing glue **32** and **33** linked to the support situated at the entry of the machine/table, that feed the outlet spouts which deposit longitudinally, on each face of the inner layers, a strand of glue 1 mm thick, which will maintain these and the outer layer of protected aluminum duly positioned when a cross cut is made.

In an embodiment, the disclosure is characterized by a heating wedge **4** located in the center of the support **3** which receives electric energy from the electric panel **18** provided with hydraulic command that promotes the raising and lowering thereof and pneumatic regulation of the pressure exerted on the blanket and that is only used for the production of specific references.

In an embodiment, the disclosure is characterized by two side heating wedges **7** and **8** mounted on the transverse support **6** one on each side, which receive electric energy from the electric panel **18,** provided with hydraulic command that promotes the raising and lowering thereof and pneumatic regulation of the pressure exerted in contact with the side edges of the foils made of protected aluminum as it progresses, so as to provide the partial merger thereof.

In an embodiment, the disclosure is characterized by 2 compressor rollers **10** and **11,** mounted immediately after the heating wedges **7** and **8,** one on the plane above the table **10** and the other on the plane below the table **11** and whose axes are mounted on the respective bearings connected to the side supports, moved by the motor **14** through the current **13** and which, by effect of pressure controlled through the cog wheel **12** interspersed in said current, promotes the sealing/welding of the side edges of the 2 foils made of protected aluminum, partially merged.

In an embodiment, the disclosure is characterized by the material produced being conducted horizontally along the table by the rollers **10** and **11,** by effect of traction due to its positive movement, and delivered to the winding rack **22** forming rollers with a length pre-defined by way of the control panel **19.**

In an embodiment, the disclosure is characterized in that the cut of the material that forms the roll (blanket) can be carried out by automatic means through the circular scissors **17** which makes a cross cut, or manually, with a common pair of scissors.

In an embodiment, the disclosure is characterized by all the controls of the machine (electric, pneumatic, hydraulic, speed and length of the rollers) are carried out by pre-set parameters by way of the control commands situated in the upper part of the electric panels **5** and **18.**

In an embodiment, the disclosure is characterized in that the motors can be electric or any other type and the transmission is carried out by chains or the like.

In an embodiment, the disclosure is characterized by the length of the rollers of the material produced can be variable, in accordance with the type of blanket, the thickness thereof and the customer's interest.

In an embodiment, the disclosure is characterized by comprising 3 emergency stop devices.

## Claims

1. Device for continuous sealing of a blanket for application in buildings, wherein said blanket comprises one or more inner layers arranged between an upper outer layer and a lower outer layer, said device comprising in the direction of progression of the blanket:
at least two side fusing wedges (7,8) for partially merging the side ends of the outer layers between them;
a first compressor roller (10) and a second compressor roller (11) arranged for compressing the side ends partially merged between the rollers;
wherein each fusing wedge comprises a heated surface and a support surface (1) for receiving and partially merging the side ends of the outer layers between said heated surface and said support surface.

2. Device according to the previous claim wherein each of the heated surfaces of each of the fusing wedges comprises a slope, between 12 - 20°, in particular 15°.

3. Device according to any of the previous claims wherein the longitudinal distance between the first compressor roller (10) and the second compressor roller (11) is independently adjustable for applying different pressures at the merged side ends.

4. Device according to any of the previous claims wherein the device further comprises at least one central fusing wedge (4) for merging the outer layers between them, wherein each fusing wedge comprises a heated surface and a support surface (1) for receiving and merging the outer layers between said heated surface and said support surface.

5. Device according to any of the previous claims wherein the device further comprises at least one blanket accompanying transverse roller to direct the side ends of the outer layers towards the two side fusing wedges (7,8).

6. Device according to any of the previous claims, further comprising one or more means of restraint and heating of a fusing glue for longitudinal application between one or more inner layers and the upper outer layer and/or one lower outer layer.

7. Device according to the previous claim wherein the fusing glue is applied with a thickness between 0.5 and 1.5 mm, in particular 1 mm.

8. Device according to any of the previous claims wherein the first compressor roller (10) and the second compressor roller (11) are linked to a bearing connected on one or more side supports, wherein the side supports are fixed structures that provide support and stability to the compressor rollers.

9. Device according to the previous claim wherein the bearings of the shafts are configured for permitting free rotation and supporting axial and radial loads.

10. Device according to any of the previous claims wherein the first compressor roller (10) and the second compressor roller (11) are configured for comprising a speed control mechanism for adjusting the rotation of said compressor rollers, wherein the control mechanism includes a mechanical transmission or a direct transmission for transferring the energy of a motor to the compressor rollers.

11. Method for continuous sealing of a blanket for application in buildings, wherein said blanket comprises one or more inner layers arranged between an upper outer layer and a lower outer layer, using a device according to any of the previous claims 1-10, wherein said method for continuous sealing comprises the following steps:
arranging the blanket in the direction of progression, comprising one or more inner layers, the upper outer layer and the lower outer layer;
determining the melt temperature of the outer layers;
partially merging the side ends of the outer layers between them;
compressing the side ends partially merged between the first compressor roller (10) and the second compressor roller (11).

12. Method according to the previous claim further comprising an electronic data processor configured for controlling the melt temperature of the outer layers so as to partially merge the side ends of the outer layers between them.

13. Method according to the previous claim wherein the electronic data processor is configured for controlling the movement for driving the compressor rollers, providing controlled movement.

14. Method according to any of the previous claims 12 - 13 wherein the electronic data processor is configured for controlling the longitudinal distance between the first compressor roller (10) and the second compressor roller (11) independently for applying different pressures on the merged side ends.

15. Non-temporary storage means including program instructions for implementing a method for continuous sealing of a blanket for application in buildings, the program instructions including instructions executable by a data processor to implement the method of any of claims 11 - 14.

## Patentansprüche

1. Vorrichtung zum kontinuierlichen Abdichten eines Dämmstoffes für die Anwendung in Gebäuden, wobei der genannte Dämmstoff eine oder mehrere innere Schichten umfasst, die zwischen einer oberen Außenschicht und einer unteren Außenschicht angeordnet sind, wobei die genannte Vorrichtung in der Verlaufsrichtung des Dämmstoffs umfasst:
mindestens zwei seitliche Schmelzkeile (7, 8) zum teilweisen Verschmelzen der seitlichen Enden der Außenschichten miteinander;
eine erste Anpressrolle (10) und eine zweite Anpressrolle (11), die so angeordnet sind, dass sie die teilweise zwischen den Rollen verschmolzenen Seitenenden zusammenpressen;
wobei jeder Schmelzkeil eine beheizte Fläche und eine Auflagefläche (1) zur Aufnahme und zum teilweisen Verschmelzen der Seitenenden der äußeren Schichten zwischen der genannten beheizten Fläche und der genannten Auflagefläche aufweist.

2. Vorrichtung nach dem vorangehenden Anspruch, wobei jede der beheizten Flächen jedes der Schmelzkeile eine Neigung zwischen 12-20° aufweist, insbesondere 15°.

3. Vorrichtung nach einem der vorangehenden Ansprüche, wobei der Längsabstand zwischen der ersten Anpressrolle (10) und der zweiten Anpressrolle (11) unabhängig einstellbar ist, um unterschiedliche Drücke an den verschmolzenen Seitenenden auszuüben.

4. Vorrichtung nach einem der vorangehenden Ansprüche, wobei die Vorrichtung ferner mindestens einen zentralen Schmelzkeil (4) zum Verschmelzen der Außenschichten miteinander umfasst, wobei jeder Schmelzkeil eine beheizte Fläche und eine Auflagefläche (1) zur Aufnahme und zum Verschmelzen der Außenschichten zwischen der genannten beheizten Fläche und der genannten Auflagefläche umfasst.

5. Vorrichtung nach einem der vorangehenden Ansprüche, wobei die Vorrichtung ferner mindestens eine den Dämmstoff begleitende Querrolle umfasst, um die seitlichen Enden der Außenschichten auf die beiden seitlichen Schmelzkeile (7, 8) zu lenken.

6. Vorrichtung nach einem der vorangehenden Ansprüche, ferner umfassend ein oder mehrere Mittel zum Zurückhalten und Erwärmen eines Schmelzklebers zum Aufbringen in Längsrichtung zwischen einer oder mehreren inneren Schichten und der oberen Außenschicht und/oder einer unteren Außenschicht.

7. Vorrichtung nach dem vorangehenden Anspruch, wobei der Schmelzkleber mit einer Stärke zwischen 0,5 und 1,5 mm aufgetragen wird, insbesondere 1 mm.

8. Vorrichtung nach einem der vorangehenden Ansprüche, wobei die erste Anpressrolle (10) und die zweite Anpressrolle (11) mit einem Lager verbunden sind, das mit einem oder mehreren Seitenträgern verbunden ist, wobei die Seitenträger feste Strukturen sind, die den Anpressrollen Halt und Stabilität verleihen.

9. Vorrichtung nach dem vorangehenden Anspruch, wobei die Lager der Wellen so konfiguriert sind, dass sie eine freie Drehung zulassen und Axial- und Radiallasten aufnehmen.

10. Vorrichtung nach einem der vorangehenden Ansprüche, wobei die erste Anpressrolle (10) und die zweite Anpressrolle (11) so konfiguriert sind, dass sie einen Mechanismus zur Geschwindigkeitsregelung zum Einstellen der Drehung der Anpressrollen umfassen, wobei der Regelmechanismus eine mechanische Übertragung oder eine direkte Übertragung zum Übertragen der Energie eines Motors auf die Anpressrollen umfasst.

11. Verfahren zum kontinuierlichen Abdichten eines Dämmstoffes zur Anwendung in Gebäuden, wobei der genannte Dämmstoff eine oder mehrere Innenschichten umfasst, die zwischen einer oberen Außenschicht und einer unteren Außenschicht angeordnet sind, unter Verwendung einer Vorrichtung nach einem der vorangehenden Ansprüche 1-10, wobei das genannte Verfahren zum kontinuierlichen Abdichten die folgenden Schritte umfasst:
Anordnen des Dämmstoffs in Verlaufsrichtung, umfassend eine oder mehrere innere Schichten, die obere Außenschicht und die untere Außenschicht;
Festlegen der Schmelztemperatur der Außenschichten;
Teilweises Verschmelzen der seitlichen Enden der Außenschichten miteinander;
Zusammenpressen der teilweise zwischen der ersten Anpressrolle (10) und der zweiten Anpressrolle (11) verschmolzenen Seitenenden.

12. Verfahren nach dem vorangehenden Anspruch, ferner umfassend einen elektronischen Datenprozessor, der so konfiguriert ist, dass er die Schmelztemperatur der Außenschichten so steuert, dass die Seitenenden der Außenschichten teilweise miteinander verschmelzen.

13. Verfahren nach dem vorangehenden Anspruch, wobei der elektronische Datenprozessor so konfiguriert ist, dass er die Antriebsbewegungen der Anpressrollen steuert und eine kontrollierte Bewegung ermöglicht.

14. Verfahren nach einem der vorangehenden Ansprüche 12-13, wobei der elektronische Datenprozessor so konfiguriert ist, dass er den Längsabstand zwischen der ersten Anpressrolle (10) und der zweiten Anpressrolle (11) unabhängig steuert, um unterschiedliche Drücke an den verschmolzenen Seitenenden auszuüben.

15. Nichtflüchtige Speichermedien, die Programmanweisungen zur Durchführung eines Verfahrens zum kontinuierlichen Abdichten eines Dämmstoffes zur Anwendung in Gebäuden enthalten, wobei die Programmanweisungen von dem Datenprozessor aufführbare Anweisungen enthalten, um das Verfahren nach einem der Ansprüche 11-14 auszuführen.

## Revendications

1. Dispositif pour sceller de manière continue une couverture destinée à être utilisée dans la construction, dans lequel ladite couverture comprend une ou plusieurs couches intérieures disposées entre une couche extérieure supérieure et une couche extérieure inférieure, ledit dispositif comprenant dans la direction de progression de la couverture :
au moins deux cales de fusion de côtés (7, 8) pour fusionner partiellement les extrémités latérales des couches extérieures entre elles ;
un premier rouleau compresseur (10) et un second rouleau compresseur (11) disposés pour compresser les extrémités latérales fusionnées partiellement entre les rouleaux ;
dans lequel chaque cale de fusion comprend une surface chauffante et une surface de support (1) pour recevoir et fusionner partiellement les extrémités latérales des couches extérieures entre ladite surface chauffante et ladite surface de support.

2. Dispositif selon la revendication précédente dans lequel chacune des surfaces chauffantes de chacune des cales de fusion comprend une inclinaison, située entre 12-20°, en particulier 15°.

3. Dispositif selon l'une quelconque des revendications précédentes dans lequel la distance longitudinale entre le premier rouleau compresseur (10) et le second rouleau compresseur (11) est ajustable de manière indépendante pour appliquer différentes pressions sur les extrémités latérales fusionnées.

4. Dispositif selon l'une quelconque des revendications précédentes dans lequel le dispositif comprend également au moins une cale de fusion centrale (4) pour fusionner les couches extérieures entre elles, dans lequel chaque cale de fusion comprend une surface chauffante et une surface de support (1) destinées à recevoir et fusionner les couches extérieures entre ladite surface chauffante et ladite surface de support.

5. Dispositif selon l'une quelconque des revendications précédentes dans lequel le dispositif comprend également au moins une couverture accompagnant le rouleau transversal pour guider les extrémités latérales des couches extérieures vers les deux cales de fusion latérales (7, 8).

6. Dispositif selon l'une quelconque des revendications précédentes, comprenant également un ou plusieurs moyens de retenue et de chauffage d'une colle de fusion destinée à être appliquée longitudinalement entre une ou plusieurs couches intérieures et la couche extérieure supérieure et/ou une couche extérieure inférieure.

7. Dispositif selon la revendication précédente dans lequel la colle de fusion est appliquée avec une épaisseur située entre 0,5 et 1,5mm, en particulier 1mm.

8. Dispositif selon l'une quelconque des revendications précédentes dans lequel le premier rouleau compresseur (10) et le second rouleau compresseur (11) sont liés à un palier raccordé à un ou plusieurs supports latéraux, dans lequel les supports latéraux sont des structures fixes qui offrent support et stabilité aux rouleaux compresseurs.

9. Dispositif selon la revendication précédente dans lequel les paliers des arbres sont configurés pour permettre une rotation libre et supporter des charges axiales et radiales.

10. Dispositif selon l'une quelconque des revendications précédentes dans lequel le premier rouleau compresseur (10) et le second rouleau compresseur (11) sont configurés pour comprendre un mécanisme de contrôle de vitesse pour ajuster la rotation desdits rouleaux compresseurs, dans lequel le mécanisme de contrôle inclut une transmission mécanique ou une transmission directe pour transférer l'énergie d'un moteur aux rouleaux compresseurs.

11. Procédé pour sceller de manière continue une couverture destinée à être utilisée dans la construction, dans lequel ladite couverture comprend une ou plusieurs couches intérieures disposées entre une couche extérieure supérieure et une couche extérieure inférieure, utilisant un dispositif selon l'une quelconque des revendications précédentes 1-10, dans lequel ledit procédé pour sceller de manière continue comprend les étapes suivantes :
disposer la couverture dans la direction de progression, comprenant une ou plusieurs couches intérieures, la couche extérieure supérieure et la couche extérieure inférieure ;
déterminer la température de fusion des couches extérieures ;
fusionner partiellement les extrémités latérales des couches extérieures entre elles ;
comprimer les extrémités latérales partiellement fusionnées entre le premier rouleau compresseur (10) et le second rouleau compresseur (11).

12. Procédé selon la revendication précédente comprenant également un traiteur de données électronique configuré pour contrôler la température de fusion des couches extérieures afin de fusionner partiellement les extrémités latérales des couches extérieures entre elles.

13. Procédé selon la revendication précédente dans lequel le traiteur de données électronique est configuré pour contrôler le mouvement pour guider les rouleaux compresseurs, permettant un mouvement contrôlé.

14. Procédé selon l'une quelconque des revendications précédentes 12-13 dans lequel le traiteur de données électronique est configuré pour contrôler la distance longitudinale entre le premier rouleau compresseur (10) et le second rouleau compresseur (11) de manière indépendante pour appliquer différentes pressions sur les extrémités latérales fusionnées.

15. Moyen de stockage non temporaire incluant des instructions de logiciel pour mettre en œuvre un procédé pour sceller de manière continue une couverture destinée à être utilisée dans la construction, les instructions de logiciel incluant des instructions exécutables par un traiteur de données électronique pour mettre en œuvre le procédé de l'une quelconque des revendications 11-14.
